(19) **Europäisches Patentamt**

**European Patent Office**

**Office européen des brevets**

(11) Veröffentlichungsnummer : **0 325 589 B1**

(12) **EUROPÄISCHE PATENTSCHRIFT**

(45) Veröffentlichungstag der Patentschrift :
**05.06.91 Patentblatt 91/23**

(51) Int. Cl.$^5$ : **B60T 8/32,** B60K 28/16

(21) Anmeldenummer : **87905612.5**

(22) Anmeldetag : **27.08.87**

(86) Internationale Anmeldenummer :
**PCT/EP87/00483**

(87) Internationale Veröffentlichungsnummer :
**WO 88/02708 21.04.88 Gazette 88/09**

(54) **ANTRIEBSSCHLUPFREGELEINRICHTUNG.**

(30) Priorität : **08.10.86 DE 3634240**

(43) Veröffentlichungstag der Anmeldung :
**02.08.89 Patentblatt 89/31**

(45) Bekanntmachung des Hinweises auf die
Patenterteilung :
**05.06.91 Patentblatt 91/23**

(84) Benannte Vertragsstaaten :
**AT CH DE FR GB LI**

(56) Entgegenhaltungen :
**EP-A- 0 163 941**
**DE-A- 3 635 095**

(73) Patentinhaber : **ROBERT BOSCH GMBH**
**Postfach 50**
**W-7000 Stuttgart 1 (DE)**

(72) Erfinder : **KOPPER, Werner**
**8830 Skylane Drive**
**Brighton, MI 48116 (US)**
Erfinder : **SCHIELE, Werner**
**25943 Ridgewood Drive**
**Farmington Hills, MI 48018 (US)**

(74) Vertreter : **Kammer, Arno**
**Postfach 10 56 08 Grenzhöfer Weg 36**
**W-6900 Heidelberg 1 (DE)**

## Beschreibung

### Stand der Technik

Die Erfindung betrifft eine Antriebsschlupfregeleinrichtung mit den Merkmalen des Oberbegriffs des Anspruchs 1.

Eine derartige Antriebsschlupfregeleinrichtung ist aus der EP-A2 64669 bekannt. Dort wird um ein Abwürgen des Motors zu verhindern eine weitere Motordrehmomentreduzierung unterbunden, wenn die Motordrehzahl unter die Leerlaufdrehzahl abfällt.

### Vorteile der Erfindung

Gegenüber der bekannten Antriebsschlupfregeleinrichtung hat die Antriebsschlupfregeleinrichtung gemäß den Merkmalen des Anspruchs 1 den Vorteil, daß sie ein Anwürgen des Motors durch die Bremsbetätigung verhindert. Es kann nämlich vorkommen, daß bei einem früheren Einkuppeln und Ansprechen der Antriebsschlupfregelung auch die Bremsen ein Abwürgen des Motors zustande bringen können.

### Figurenbeschreibung

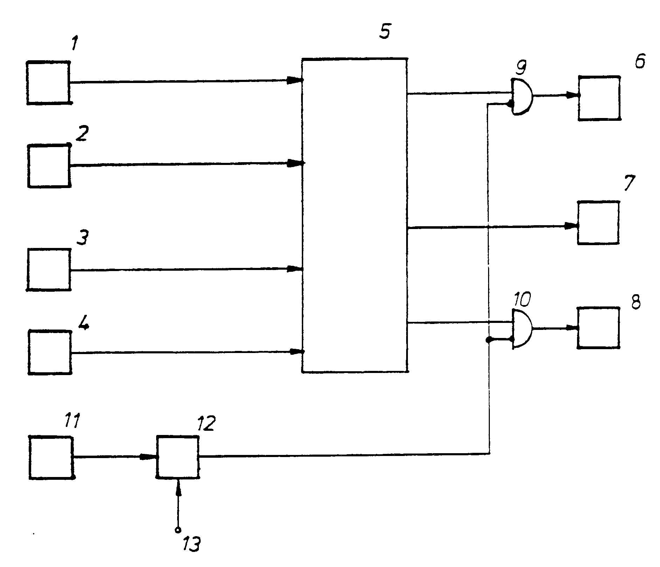

In der Zeichnung ist ein Ausführungsbeispiel der Erfindung in Form eines Blockdiagramms dargestellt. Dort sind mit 1 und 2 den nicht angetriebenen Rädern zugeordnete Radgeschwindigkeitsgeber und mit 3 und 4 entsprechende Meßwertgeber der angetriebenen Räder bezeichnet. Eine Auswerteschaltung trägt das Bezugszeichen 5. Mit 6 und 8 sind den beiden angetriebenen Rädern zugeordnete Stellglieder bezeichnet, bei deren Ansteuerung die Bremsen betätigt werden. Mit 7 ist ein weiteres Stellglied bezeichnet, das bei Ansteuerung des Motormoments reduziert.

Wird in der Auswerteschaltung 5 festgestellt, daß eines der angetriebenen Räder durchdreht oder Durchdrehneigung zeigt, was durch Drehzahlvergleich von angetriebenen und nicht angetriebenen und/oder durch Feststellung einer zu hohen Radbeschleunigung ermittelt werden kann, so wird das zugehörige Stellglied 6 und/oder 8 angesteuert und Bremsdruck an der zugehörigen Radbremse eingesteuert.

Zeigen beide Räder Durchdrehneigung, so kann zusätzlich noch mittels des Stellglieds 7 das Motormoment reduziert werden.

Der Eingriff der Bremsen auf die Räder wird jedoch durch Und-Gatter 9 bzw. 10 gesperrt, wenn in einem Vergleicher 12 festgestellt wird, daß die vom Meßwertgeber 11 ermittelte Motordrehzahl unterhalb einer Drehzahl liegt, die durch ein Signal an der Klemme 13 vorgegeben ist. Der Vergleicher 12 gibt dann ein Sperrsignal auf die invertierten Eingänge der Und-Gatter 9 und 10. Vorzugsweise ist die vorgegebene Drehzahl die Motorleerlaufdrehzahl.

### Ansprüche

1. Antriebsschlupfregeleinrichtung bei der bei Durchdrehen eines angetriebenen Fahrzeugrads dieses gebremst wird und bei dem gegebenenfalls zusätzalich bei Durchdrehen beider angetriebener Räder das Motordrehmoment reduziert wird, wobei die Motordrehzahl (aus 11) mit einem vorgegebenen Drehzahlwert (von 13) vorzugsweise mit der Leerlaufdrehzahl verglichen wird (12) und die Wirkung der Antriebsschlupfregeleinrichtung (1-8) reduziert wird, wenn die Motordrehzahl die vorgegebene Drehzahl unterschreitet, <u>dadurch gekennzeichnet,</u> daß das Einwirken der Antriebsschlupfregeleinrichtung (1–8) auf die Bremsen der angetriebenen Räder gesperrt wird (Tore 9, 10), wenn die Motordrehzahl (aus 11) die vorgegebene Drehzahl (von 13) unterschreitet.

### Claims

1. Drive slippage limiting device in which, in the case of spinning of a driven vehicle wheel, said wheel is braked and in which in addition, if required, the engine torque is reduced in the event of both driven wheels spinning, the engine speed (from 11) being compared (12) to a stipulated speed value (from 13), preferably to the idling speed, and the effect of the drive slippage limiting device (1-8) is reduced if the engine speed falls below the stipulated speed, characterised in that the action of the drive slippage limiting device (1-8) on the brakes of the driven wheels is blocked (gates 9, 10) if the engine speed (from 11) falls below the predetermined speed (from 13).

### Revendications

1. Dispositif de limitation du patinage d'entraînement, avec lequel, lors du patinage d'une roue entraînée du véhicule, celui-ci est freiné et avec lequel le couple du moteur est réduit, le cas échéant, en plus, si les deux roues entraînées patinent, tandis que la vitesse du moteur (d'après 11) est comparée (12) à une valeur de vitesse de rotation (par 13) prescrite, de préférence la vitesse de ralenti, et que l'effet du dispositif de limitation du patinage d'entraînement (1, 8) est réduit si la vitesse du moteur est inférieure à la vitesse prescrite, caractérisé en ce que l'action du dispositif de limitation du patinage d'entraînement (1-8) sur les freins des roues entraînées (portes 9, 10) est bloquée, si la vitesse de rotation du moteur (d'après 11) est inférieure à la vitesse prescrite (par 13).